# FASCICULE DE BREVET EUROPEEN

(11) **EP 2 547 560 B1**
(45) Date de publication et mention de la délivrance du brevet: **01.01.2014**
(21) Numéro de dépôt: 11702835.7
(22) Date de dépôt: 10.02.2011
(51) Int. Cl.: B60S 1/48, B60S 1/52

(54) **COMMANDE D'UN SYSTEME DE LAVE-VITRE ASSOCIE A UN SYSTEME D'ESSUYAGE POUR VEHICULE AUTOMOBILE**
STEUERUNG EINES FENSTERWÄSCHERSYSTEMS IM ZUSAMMENHANG MIT EINEM SCHEIBENWISCHERSYSTEM FÜR EIN KRAFTFAHRZEUG
CONTROL OF A WINDOW WASHER SYSTEM ASSOCIATED WITH A WIPER SYSTEM FOR A MOTOR VEHICLE

(30) Priorité: 16.03.2010 FR 1001043
(43) Date de publication de la demande: 23.01.2013
(73) Titulaire: Valeo Systèmes d'Essuyage, 78321 Le Mesnil Saint Denis (FR)
(72) Inventeur: CALLUIERE, Johan, F-78370 Plaisir (FR); THEBAULT, Denis, 63000 Clermont Ferrand (FR); NEGRE, Pierre-Emmanuel, F-75014 Paris (FR)
(74) Mandataire: Callu Danseux, Violaine
(86) Numéro de dépôt international: PCT/EP2011/051981
(87) Numéro de publication internationale: WO 2011/113648

(56) Documents cités:
- EP-A1- 2 123 525
- DE-A1-102008 024 357
- DE-C1- 3 612 620
- FR-A1- 2 931 118
- US-A1- 2007 084 484

## Description

La présente invention concerne la commande d'un système de lave-vitre associé, voire intégré, à un système d'essuyage d'une surface vitrée de véhicule automobile, telle que le pare-brise et/ou la lunette arrière.

Dans les systèmes de lave-vitre existant à ce jour, il est connu de prévoir que le liquide de lavage ne soit diffusé que sur une partie seulement de la course vers le haut et/ou vers le bas du balai sur la surface vitrée.

Ainsi, des systèmes de lave-vitre permettant de commander l'aspersion lorsque le ou les bras porte-balai sont dans des zones angulaires prédéfinies ont déjà été développés.

If est également connu, par exemple du document GB 2 326 083, qu'un nettoyage amélioré d'une surface vitrée du véhicule automobile peut être obtenu en prévoyant d'amener le liquide de lavage alternativement à droite ou à gauche de la lame ou balai du système d'essuyage, selon que le balai se déplace vers le bas de la surface ou vers le haut de la surface, de façon à ce que le liquide arrose effectivement une portion de la surface vitrée qui va immédiatement être balayée par le balai d'essuyage.

Quel que soit le système utilisé, la zone de la surface vitrée au niveau de laquelle le liquide de lavage doit être effectivement aspergé sur un cycle de balayage du bras d'essuyage, à la montée et/ou à la descente, doit être déterminée pour chaque véhicule automobile de manière à gêner le moins possible le conducteur du véhicule, tout en garantissant un nettoyage efficace de la surface vitrée par l'action combinée de l'aspersion de liquide et de l'essuyage. Cette zone étant déterminée, il est nécessaire de pouvoir déterminer les instants de déclenchement puis d'arrêt de l'aspersion de liquide lors d'un cycle de balayage.

Certaines méthodes connues prévoient de contrôler l'aspersion en fonction de la position angulaire du ou des bras porte-balai lors d'un cycle de balayage. La position angulaire du bras d'essuyage étant elle-même fonction de la position angulaire de l'arbre du moteur d'entraînement de ce bras, ces méthodes prévoient d'équiper l'arbre du moteur d'essuyage d'une came liée à rotation concentriquement à cet arbre, et coopérant avec des contacts ou frotteurs pour délivrer un signal de commande d'aspersion de liquide pour certaines positions angulaires seulement de l'arbre d'entrainement.

L'inconvénient majeur de ces systèmes est qu'il est nécessaire de développer un système par modèle de véhicule. En effet, le profil de la came et le positionnement des frotteurs doivent être définis pour chaque véhicule auquel le système d'essuyage est destiné. Ainsi, de telles solutions sont coûteuses à développer.

Pour pallier l'inconvénient précédent, le Document EP 2123525 au nom de la Demanderesse décrit un système de lave-vitre intégré à un système d'essuyage d'une surface vitrée de véhicule automobile, dans lequel on estime en temps réel, sur chaque cycle d'essuyage, les variations de vitesse du bras porte-balai sur la surface vitrée en fonction de paramètres relatifs aux conditions d'utilisation du véhicule, puis on adapte en conséquence l'instant de déclenchement et/ou l'instant d'arrêt de l'aspersion.

Néanmoins, les résultats quant à la précision de la zone d'aspersion restent insuffisants.

La présente invention a pour but de permettre la projection du liquide de lavage exactement à l'endroit souhaité sur ia surface vitrée.

Pour ce faire, la présente invention a pour objet un procédé de commande d'un système de lave-vitre associé à un système d'essuyage d'une surface vitrée de véhicule automobile, ledit système d'essuyage comprenant un moteur d'essuyage pour l'entraînement en rotation d'au moins un bras porte-balai, et le système de lave-vitre comportant un réservoir de liquide relié à au moins un gicleur apte à délivrer, sur un cycle d'essuyage, au moins un jet de liquide pendant au moins une première période d'activation du système de lave-vitre définie entre un instant de déclenchement de l'aspersion du liquide et un instant d'arrêt de l'aspersion du liquide déterminés chacun en fonction respectivement d'une première position angulaire et d'une deuxième position angulaire du bras porte-balai définissant un premier secteur angulaire dans lequel l'aspersion du liquide est continue, le procédé étant caractérisé en ce qu'il consiste à avancer l'instant de déclenchement de l'aspersion d'une durée de compensation correspondant au moins à la durée d'acheminement du liquide du réservoir au gicleur

On s'affranchit ainsi des retards temporels du système liés à l'inertie du liquide de lavage et à l'architecture hydraulique du système de lave-vitre.

Le défaut de précision pouvant être dû également au temps de traitement électrique/électronique, on peut prévoir avantageusement que !a durée de compensation soit en outre fonction de ce retard de traitement.

Dans un mode de réalisation préféré, on prend en compte en outre les conditions d'utilisation du véhicule, telles que la température extérieure, la vitesse du véhicule, la pluie ou la neige, ou encore le degré de salissure sur la surface vitrée, pour ajuster, c'est-à-dire augmenter ou réduire, la durée de compensation.

Pour ce mode de réalisation préféré, le procédé de commande consistera en outre à estimer en temps réel, sur chaque cycle d'essuyage, les variations de vitesse du bras porte-balai sur la surface vitrée en fonction de paramètres relatifs aux conditions d'utilisation du véhicule, et à déterminer ladite durée de compensation également en fonction des variations de vitesse estimées,

La présente invention a également pour objet un module de commande d'un système de lave-vitre associé à un système d'essuyage d'une surface vitrée de véhicule automobile, ledit système d'essuyage comprenant un moteur d'essuyage pour l'entraînement en rotation d'au moins un bras porte-balai, et le système de lave-vitre comportant au moins un réservoir de liquide et une pompe apte à être reliée à un réservoir de liquide de lavage et à au moins un gicleur, ladite pompe étant commandée par un signal de commande de façon à délivrer, sur un cycle d'essuyage, au moins un jet de liquide pendant au moins une première période d'activation du système de lave-vitre définie entre un instant de déclenchement de l'aspersion du liquide et un instant d'arrêt de l'aspersion du liquide déterminés chacun en fonction respectivement d'une première position angulaire et d'une deuxième position angulaire du bras porte-balai définissant un premier secteur angulaire dans lequel l'aspersion du liquide est continue, caractérisé en ce qu'il comporte des moyens pour avancer l'instant de déclenchement de l'aspersion d'une durée de compensation correspondant au moins à la durée d'acheminement du liquide du réservoir au gicleur.

La présente invention a enfin pour objet un système d'essuyage comportant le module de commande défini précédemment.

L'invention et les avantages qu'elle procure seront mieux compris au vu de la description suivante d'un exemple non limitatif d'un système de lave-vitre associé à un système d'essuyage, faite en référence aux figures annexée, dans lesquelles :
- la figure 1 représente, sous forme de synoptique simplifié, un système de lave-vitre associé à un système d'essuyage selon une mise en oeuvre possible de l'invention ;
- la figure 2 illustre le principe de la commande selon l'invention sous forme d'un diagramme temporel sur un cycle d'essuyage.

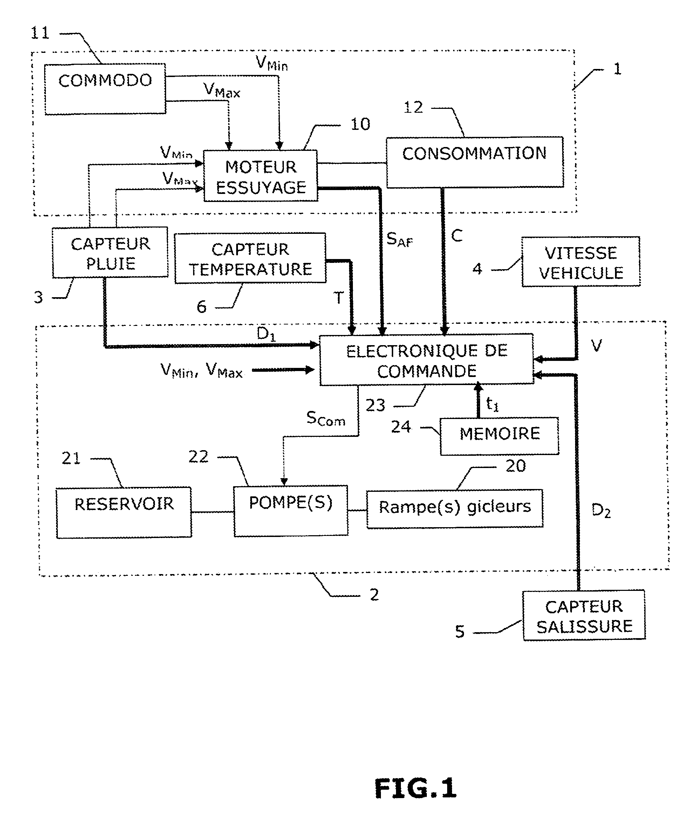

En référence à la figure 1, on a représenté sous forme de synoptique simplifié, certains éléments d'un système d'essuyage équipé d'un système de lave-vitre intégré, ainsi que les différentes liaisons avec différents éléments compris ou non dans le système d'essuyage, permettant la mise en oeuvre du procédé de commande du système lave-vitre selon l'invention.

Plus précisément, un système permettant de mettre en oeuvre le procédé de commande selon l'invention comporte :
- une première partie d'éléments propres au fonctionnement du système d'essuyage, représentée schématiquement dans un sous-ensemble portant la référence 1 ;
- une deuxième partie d'éléments propres au fonctionnement du système de lave-vitre, représentée schématiquement dans un sous-ensemble portant la référence 2 ;
- optionnellement, différents éléments tels qu'un capteur 3 de pluie, un capteur 4 de vitesse du véhicule, un capteur 5 du degré de salissure de la surface vitrée, ou un capteur 6 de température extérieure, éventuellement un capteur d'hydrométrie (non représenté), ces différents éléments ne faisant pas partie nécessairement du système d'essuyage 1 ou de lave-vitre 2 à proprement dit.

La première partie 1 propre au fonctionnement du système d'essuyage comprend classiquement un moteur d'essuyage 10 permettant d'entraîner en rotation alternée au moins un bras porte-balai (non représenté). Le moteur d'essuyage 10 est par exemple monodirectionnel, et la rotation alternée du bras porte-balai peut être classiquement obtenue grâce à mécanisme de liaison non représenté, appelé timonerie, entre l'arbre d'entraînement du moteur, et le bras porte-balai. La rotation du moteur d'essuyage est commandée soit de façon manuelle, par exemple par l'activation d'un commodo 11 par le conducteur, soit de façon automatique, par exemple suite à la détection de pluie par le capteur 3 de pluie. Dans les deux cas, le moteur d'essuyage peut être commandé pour tourner selon au moins deux vitesses de rotation, une petite vitesse V_{Min} et une grande vitesse V_{Max}. Typiquement, la petite vitesse correspond à 45 cycles de balayage par minute, alors que la grande vitesse correspond à 60 cycles de balayage par minute. Un mode intermittent, qui peut être assimilé à la petite vitesse de rotation, existe aussi dans la plupart des systèmes.

Pour ce qui concerne la deuxième partie relative au fonctionnement du système de lave-vitre, ledit système comporte ici, à titre d'exemple non limitatif, deux gicleurs ou deux séries de gicleurs 20 disposés ou non en rampe sur le bras porte-balai ou encore au niveau du balai. Le système de lave-vitre est ainsi intégré au système d'essuyage et les gicleurs suivent le mouvement du bras porte-balai lors d'un cycle d'essuyage. Les deux gicleurs ou série de gicleurs 20 sont disposés sur le bras ou sur le balai de manière à pouvoir diriger deux jets de liquide de part et d'autre du balai. Ces deux gicleurs ou séries de gicleurs 20 sont alimentés en liquide de lavage contenu dans un réservoir 21 par l'intermédiaire d'une pompe bidirectionnelle 22. Selon le sens de rotation de la pompe bidirectionnelle 22, seul un gicleur ou une série de gicleurs permet effectivement, sur une portion de balayage donnée, de générer un ou plusieurs jets. Le sens de rotation de la pompe doit être déterminé de façon à ce que le jet soit toujours orienté en avant du balai par rapport à la direction de balayage du bras porte-balai. Ainsi, sur la moitié du cycle de balayage correspondant au déplacement du bras de sa position dite d'arrêt fixe vers sa position en haut de la surface vitrée, appelée position opposée à l'arrêt fixe, le jet sera orienté d'un premier côté. Sur l'autre moitié du cycle de balayage correspondant au déplacement du bras de sa position opposée à l'arrêt fixe vers sa position d'arrêt fixe, le sens de rotation de la pompe 22 doit être inversé pour permettre l'orientation d'un jet de l'autre côté du balai. En première variante, la pompe bidirectionnelle pourrait être remplacée par deux pompes reliées chacune à l'un des deux gicleurs, et commandées alternativement. En deuxième variante, la pompe bidirectionnelle pourrait être remplacée par une pompe unique et un distributeur à deux sorties reliées chacune à l'un des deux gicleurs et commandées alternativement.

En pratique, ie système de lave-vitre est activé de la même façon que le système d'essuyage, c'est-à-dire soit manuellement par une commande particulière sur le commodo 11, soit automatiquement suite à la détection de pluie.

Dans un tel système, on prévoit avantageusement de commander l'aspersion pendant une première période d'activation qui a lieu pendant une phase de montée du bras porte-balai sur la surface vitrée, et pendant une deuxième période d'activation du système de lave-vitre qui a lieu pendant une phase de descente du bras porte-balai sur la surface vitrée.

Comme cela a été indiqué précédemment, il est important que l'aspersion soit activée lorsque le bras porte-balai balaie une certaine zone bien définie de la surface vitrée.

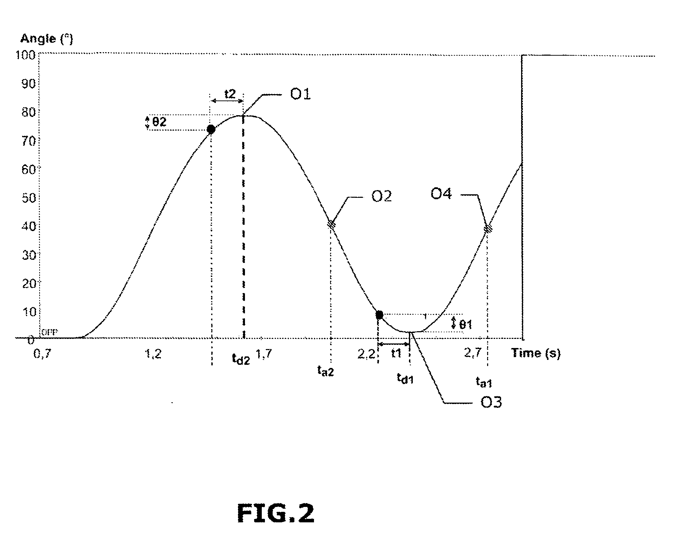

La figure 2 illustre un exemple de variation temporelle de la position angulaire du bras porte-balai sur un cycle de balayage. On suppose ici que la vitesse du bras est constante, correspondant à la vitesse sélectionnée par l'utilisateur, ce qui explique l'allure périodique de la courbe. Dans cet exemple, la première période d'activation du système de lave-vitre est définie entre un instant t_{d1} de déclenchement de l'aspersion du liquide et un instant tₐ₁ d'arrêt de l'aspersion du liquide, ces instants étant eux-mêmes classiquement déterminés chacun en fonction respectivement d'une première position angulaire et d'une deuxième position angulaire du bras porte-balai définissant un premier secteur angulaire, variant dans l'exemple entre environ 0° (correspondant à la position dite arrêt fixe) et 40°. De même, la deuxième période d'activation est définie entre un instant t_{d2} de déclenchement de l'aspersion du liquide et un instant tₐ₂ d'arrêt de l'aspersion du liquide, ces instants étant eux-mêmes classiquement déterminés chacun en fonction respectivement d'une troisième position angulaire et d'une quatrième position angulaires du bras porte-balai définissant un deuxième secteur angulaire, variant dans l'exemple entre environ 80° (correspondant à la position dite Opposée arrêt fixe) et 40°.

Une extrême précision sera obtenue si on garantit que les périodes d'activation ainsi définies correspondent exactement à des périodes d'aspersion effective et continue du liquide de lavage.

Or, les systèmes jusqu'ici connus garantissent seulement que l'on aura une aspersion continue à l'intérieur des périodes d'activation, mais pas que l'aspersion sera effective dès les instants t_{d1} ou t_{d2},

Ceci est dû notamment à l'existence d'un retard intrinsèque lié à l'architecture hydraulique du système de lave-vitre, et à l'inertie du liquide.

L'invention prévoit avantageusement d'avancer l'instant de déclenchement de l'aspersion d'une durée de compensation correspondant au moins à la durée d'acheminement du liquide du réservoir 21 au gicleur 20. Pour ce faire, le module de commande comporte des moyens 23, typiquement une électronique de commande apte à appliquer la durée de compensation à l'instant de déclenchement.

Cette durée d'acheminement étant fonction de l'architecture, elle peut être déterminée à l'avance, par exemple lors d'essais expérimentaux permettant de déterminer une durée moyenne entre le moment où la pompe 22 reçoit un signal de commande S_{COM} commandant son activation, et le moment où du liquide de lavage est effectivement délivré par le ou les gicleurs 20. La durée d'acheminement est une durée fixe prédéterminée et mémorisée dans une mémoire 24 du module de commande reliée aux moyens de commande 23.

La durée de compensation peut être en outre également fonction du retard de traitement électrique inhérent au système de lave-vitre. Tout comme le retard lié à l'architecture hydraulique, le retard de traitement électrique peut être mesuré à l'avance pour chaque système.

En se reportant de nouveau à la figure 2, on a indiqué par t₁ et t₂ les durées de compensation appliquées respectivement pour les phases montantes et descendantes du cycle d'essuyage. On constate que la compensation ne peut être appliquée au mieux qu'à partir de la première phase descendante. Néanmoins, dès la première phase descendante, on garantit l'aspersion au point O1 d'abscisse t_{d2} voulu. De même, dès la phase montante suivante, on garantit seule la première phase montante, on garantit l'aspersion au point 03 d'abscisse t_{d1} voulu.

On remarquera que le système, voire le moteur lui-même si on utilise un moteur électronique, connaît très exactement sa position angulaire à tout moment du cycle. Il est donc totalement équivalent, comme illustré sur la figure 2, de considérer que l'instant de déclenchement (t_{d1}, t_{d2}) va être avancé d'une durée de compensation (respectivement t₁, t₂), ou de considérer que les positions angulaires occupées par le moteur aux instants de déclenchement (t_{d1}, t_{d2}) vont être modifiées d'une valeur angulaire (respectivement θ₁, θ₂) correspondante.

En d'autres termes, l'instant de déclenchement peut être avancé en commandant l'activation du système de lave-vitre à un instant correspondant à l'instant de déclenchement (respectivement t_{d1}, t_{d2}) minoré de ladite durée de compensation (respectivement t₁, t₂).

En variante, l'instant de déclenchement est avancé en commandant l'activation du système de lave-vitre à une position angulaire du bras porte-balais correspondant à la première position angulaire, respectivement la troisième position angulaire, corrigée d'une valeur angulaire, respectivement θ₁, θ₂ correspondant au déplacement angulaire du bras porte-balai pendant une durée correspondant à ladite durée de compensation (respectivement t₁ ou t₂).

Par ailleurs, il convient de noter que les vitesses V_{Min} et V_{Max} du moteur d'essuyage sont des vitesses toutes théoriques qui sont en pratique rencontrées uniquement dans des conditions très particulières d'utilisation du véhicule (véhicule à l'arrêt et protégé des conditions climatiques, surface vitrée propre).

En pratique, le temps mis par le bras porte-balai pour atteindre effectivement la zone d'aspersion ne va pas être fonction de la seule vitesse V_{Min} ou V_{Max} du moteur d'essuyage, mais va dépendre également des conditions d'utilisation du véhicule.

Ainsi, si le véhicule est à l'arrêt, la vitesse du bras d'essuyage sur la phase de montée du bras sera généralement identique à la vitesse du bras d'essuyage sur la phase de descente du bras. En revanche, si le véhicule se déplace à grande vitesse, le bras associé à l'essuyage du pare-brise se déplacera beaucoup plus vite sur la phase de montée que sur la phase de descente. Il en va de même si la vitesse relative subie par le système bras-balai est importante, en raison de la vitesse du vent qui vient s'ajouter à la vitesse du véhicule,

De même, un bras d'essuyage ne se déplace pas à la même vitesse selon que la surface vitrée qu'il balaie est sèche ou mouillée, propre ou sale.

Aussi, conformément à un mode de réalisation préférentiel de l'invention, la durée de compensation t₁, t₂ va être en outre avantageusement ajustée en fonction des variations de vitesse du bras porte-balai sur la surface vitrée, estimées en temps réel, sur chaque cycle d'essuyage, à partir de paramètres relatifs aux conditions d'utilisation du véhicule.

Pour ce faire, les moyens 23 sont aptes à recevoir des informations sur différents paramètres relatifs aux conditions d'utilisation du véhicule, de manière à estimer en temps réel, sur chaque cycle d'essuyage, les variations de vitesse du bras porte-balai sur la surface vitrée en fonction de ces paramètres. A partir de ces paramètres, les moyens 23 vont pouvoir ajuster en temps réel chacune des durées de compensation t₁ et t₂ en fonction des variations de vitesse estimées, et générer le signal de commande S_{Com} de ia pompe 22 aux bons instants.

Les variations de vitesse du bras porte-balai peuvent être estimées à partir d'une information sur la vitesse théorique sélectionnée (V_{Min} ou V_{Max}) de balayage du système d'essuyage et d'une information sur la vitesse du véhicule. L'information sur la vitesse théorique pourra être obtenue par le commodo 11 ou le capteur de pluie 3 lorsque celui-ci déclenche automatiquement l'essuyage, et de là déclenche, en combiné le lavage. En variante, cette information pourra être obtenue par une sortie du moteur d'essuyage à laquelle les moyens de calcul 23 sont reliés. En outre, comme schématisé sur la figure, l'électronique de commande 23 peut être reliée à une sortie du capteur 4 délivrant aux moyens 23 de calcul une information V sur la vitesse du véhicule. Ainsi, si la vitesse V du véhicule est élevée, il conviendra d'ajuster de façon distincte les durées de compensation t₁ et t₂, typiquement en réduisant la durée de compensation t₁ des phases montantes, et en augmentant la durée de compensation t₂ des phases descendantes.

En complément ou en variante, les variations de vitesse du bras porte-balai pourront être estimées à partir d'une mesure de ia température extérieure au véhicule, et éventuellement d'une mesure par un capteur d'hydrométrie. Une telle information permet en effet de déduire une information sur l'état sec ou mouillé de la surface vitrée et d'ajuster en conséquence les durées de compensation. Pour ce faire, le module de commande peut être relié à une sortie du capteur 6 délivrant aux moyens 23 de calcul une information T sur la température véhicule.

L'information sur l'état sec ou mouillé de la surface vitrée peut également être obtenue à partir du capteur 3 de pluie. En conséquence, les variations de vitesse du bras porte-balai pourront estimées également à partir d'une information relative à la détection de pluie, en prévoyant que le module de commande soit relié à une sortie du capteur 3 délivrant aux moyens 23 de calcul une information D₁ sur la détection de pluie.

En variante ou en combinaison, on peut prévoir égaiement d'utiliser une information D₂ relative au degré de salissure sur la surface vitrée, fournie aux moyens de calcul 23 par la sortie du capteur 5 de salissure de la surface vitrée. Ainsi, si la vitre est très sale, la vitesse de balayage sera inférieure à la vitesse théorique choisie. Il conviendra dans ce cas de diminuer les durées de compensation t₁ et t₂ pour les phases montantes et descendantes, au moins pendant un certain nombre de cycles.

En variante ou en combinaison, on peut en outre prévoir de mesurer les efforts subis par l'axe du moteur d'essuyage afin d'estimer la consommation de ce moteur 10. Dans ce cas, les moyens de calcul 23 reçoivent cette information délivrée par un moyen 12 de mesure de la consommation du moteur d'essuyage.

On comprend aisément qu'en fonction du type de capteurs dont est équipé le véhicule, différents ajustements des durées de compensation vont pouvoir s'opérer, certains visant à augmenter, d'autres à diminuer les durées de compensation, tous les ajustements s'additionnant en valeur relative pour donner des valeurs optimisées des durées de compensation. Les valeurs des ajustements à effectuer dans chacun des cas pourront être établies de façon expérimentale, et stockées dans le système sous forme de tables.

En replacement des différents capteurs précités, on peut prévoir avantageusement d'utiliser un moteur d'essuyage de type électronique. En effet, dans ce cas, le moteur peut lui-même, à tout moment, calculer ses variations de vitesses d'un cycle à l'autre ou même à l'intérieur d'un même cycle, et délivrer ces informations aux moyens 23 pour permettre un ajustement des durées de compensation.

D'autres alternatives sont possibles sans départir du cadre de l'invention :

Ainsi, l'invention est également applicable pour un système d'essuyage à lave-vitre intégré pour lequel le ou les gicleurs sont disposés de telle manière que l'aspersion ne peut être effectuée que sur une phase montante, ou une phase descendante du bras sur un cycle de balayage, ou encore à un système de lave-vitre pour lequel un ou plusieurs gicleurs sont disposés de manière fixe sur le capot du véhicule. En outre, il importe peu que l'aspersion du liquide soit effectuée en avant ou en arrière du balai par rapport à ia trajectoire suivie par le balai lors de l'essuyage.

En outre, l'électronique de commande 23 a été représenté sur la figure 1 comme faisant partie du système de lave-vitre. Néanmoins, cette électronique peut être également localisée au niveau du système d'essuyage, ou même au niveau de l'électronique du moteur dans le cas où un moteur de type électronique est utilisé.

## Revendications

1. Procédé de commande d'un système de lave-vitre associé à un système d'essuyage d'une surface vitrée de véhicule automobile, ledit système d'essuyage comprenant un moteur (10) d'essuyage pour l'entraînement en rotation d'au moins un bras porte-balai, et le système de lave-vitre comportant un réservoir (21) de liquide relié à au moins un gicleur (20) apte à délivrer, sur un cycle d'essuyage, au moins un jet de liquide pendant au moins une première période d'activation du système de lave-vitre définie entre un instant (t_{d1}) de déclenchement de l'aspersion du liquide et un instant (tₐ₁) d'arrêt de l'aspersion du liquide déterminés chacun en fonction respectivement d'une première position angulaire et d'une deuxième position angulaire du bras porte-balai définissant un premier secteur angulaire dans lequel l'aspersion du liquide est continue, le procédé étant **caractérisé en ce qu'il** consiste à avancer l'instant (t_{d1}) de déclenchement de l'aspersion d'une durée (t₁) de compensation correspondant au moins à la durée d'acheminement du liquide du réservoir (21) au gicleur (20).

2. Procédé de commande selon la revendication 1, **caractérisé en ce que** l'instant de déclenchement est avancé en commandant l'activation du système de lave-vitre à un instant correspondant audit instant (t_{d1}) de déclenchement minoré de ladite durée (t₁) de compensation.

3. Procédé de commande selon la revendication 1, **caractérisé en ce que** l'instant de déclenchement est avancé en commandant l'activation du système de lave-vitre à une position angulaire du bras porte-balais correspondant à ladite première position angulaire corrigée d'une valeur angulaire correspondant au déplacement angulaire du bras porte-balai pendant une durée correspondant à ladite durée (t₁) de compensation.

4. Procédé de commande selon l'une quelconque des revendications précédentes, **caractérisé en ce que** la durée d'acheminement est une durée fixe prédéterminée.

5. Procédé de commande selon l'une quelconque des revendications précédentes, **caractérisé en ce que** la durée (t₁) de compensation est en outre fonction du retard de traitement électrique inhérent au système de lave-vitre.

6. Procédé de commande selon l'une quelconque des revendications précédentes, **caractérisé en qu**'il consiste, en outre, à estimer en temps réel, sur chaque cycle d'essuyage, les variations de vitesse du bras porte-balai sur la surface vitrée en fonction de paramètres relatifs aux conditions d'utilisation du véhicule, **et en ce que** ladite durée (t₁) de compensation est en outre fonction des variations de vitesse estimées.

7. Procédé de commande selon la revendication 6, **caractérisé en ce que** les variations de vitesse du bras porte-balai sont estimées à partir d'une information sur une vitesse théorique (V_{Min}, V_{Max}) de balayage du système d'essuyage sélectionnée et d'une information (V) sur la vitesse du véhicule.

8. Procédé de commande selon l'une quelconque des revendications 6 ou 7, **caractérisé en ce que** les variations de vitesse du bras porte-balai sont estimées à partir d'une mesure de la température (T) extérieure au véhicule, et/ou à partir d'une information (D₁) relative à la détection de pluie, et/ou à partir d'une information (D₂) relative au degré de salissure sur la surface vitrée, et/ou à partir d'une information (C) relative à la consommation du moteur (10) d'essuyage.

9. Procédé de commande selon la revendication 6, **caractérisé en ce que**
le moteur étant un moteur électronique, les variations de vitesse du bras porte-balai sont estimées à partir des variations de vitesse délivrées par le moteur.

10. Procédé de commande selon l'une quelconque des revendications précédentes, **caractérisé en ce que** ladite première période d'activation a lieu pendant une phase de montée du bras porte-balai sur la surface vitrée.

11. Procédé de commande selon la revendication 10, **caractérisé en ce que** l'instant de déclenchement du système d'essuyage est déterminé par une information (SAF) relative à la position arrêt fixe délivrée par le moteur (10) d'essuyage.

12. Procédé de commande selon l'une quelconque des revendications précédentes, **caractérisé en ce que** ledit gicleur est disposé sur ledit bras porte-balai ou sur le balai.

13. Procédé de commande selon la revendication 8, **caractérisé en ce que,** le système de lave-vitre comportant en outre au moins un gicleur supplémentaire disposé sur ledit bras porte-balai ou sur le balai, et apte à délivrer, sur un cycle d'essuyage, au moins un jet de liquide pendant une deuxième période d'activation du système de lave-vitre correspondant à une phase de descente du bras porte-balai sur la surface vitrée, l'instant (t_{d2}) de déclenchement et l'instant (tₐ₂) d'arrêt de l'aspersion correspondant à la ladite deuxième période d'activation étant déterminés chacun en fonction respectivement d'une troisième position angulaire et d'une quatrième position angulaire du bras porte-balai définissant un deuxième secteur angulaire dans lequel l'aspersion du liquide est continue, le procédé consiste également à avancer l'instant (t_{d2}) de déclenchement de l'aspersion d'une valeur égale à ladite durée de compensation.

14. Module de commande d'un système de lave-vitre associé à un système
d'essuyage d'une surface vitrée de véhicule automobile, ledit système d'essuyage comprenant un moteur (10) d'essuyage pour l'entraînement en rotation d'au moins un bras porte-balai, et le système de iave-vitre comportant au moins un réservoir (21) de liquide et une pompe (22) apte à être reliée à un réservoir (21) de liquide de lavage et à au moins un gicleur (20), ladite pompe étant commandée par un signal de commande (S_{Com}) de façon à délivrer, sur un cycle d'essuyage, au moins un jet de liquide pendant au moins une première période d'activation du système de lave-vitre définie entre un instant de déclenchement de l'aspersion du liquide et un instant d'arrêt de l'aspersion du liquide déterminés chacun en fonction respectivement d'une première position angulaire et d'une deuxième position angulaire du bras porte-balai définissant un premier secteur angulaire dans lequel l'aspersion du liquide est continue, **caractérisé en ce qu'il** comporte des moyens (23) pour avancer l'instant de déclenchement de l'aspersion d'une durée de compensation correspondant au moins à la durée d'acheminement du liquide du réservoir (21) au gicleur (20).

15. Module de commande selon la revendication 14, caractérisé **en ce**
**qu**'il est apte à être relié à une sortie du moteur (1) d'essuyage délivrant aux moyens (23) de calcul une information sur la vitesse théorique (V_{Min}, V_{Max}) du moteur (10) d'essuyage, et à une sortie d'un capteur (4) de vitesse du véhicule délivrant aux moyens (23) une information (V) sur la vitesse du véhicule.

16. Module de commande selon la revendication 15, **caractérisé en ce qu'il** est apte à être relié en outre à une sortie d'un capteur (3) de pluie délivrant aux moyens (23) une information (D₁) relative à la détection de pluie, et/ou d'un capteur (5) de salissure de la surface vitrée délivrant aux moyens (23) de calcul une information (D₂) sur le degré de salissure de la surface vitrée, et/ou d'un capteur (6) de température délivrant aux moyens (23) de calcul une information (T) sur la température extérieure au véhicule, et/ou d'un moyen (12) de mesure délivrant aux moyens (23) de calcul une information (C) sur la consommation du moteur d'essuyage, **et en ce que** les moyens (23) sont aptes à estimer en temps réel, sur chaque cycle d'essuyage, les variations de vitesse du bras porte-balai sur la surface vitrée en fonction des signaux reçus des capteurs, et à ajuster ladite durée de compensation en fonction des variations de vitesse estimées.

17. Système d'essuyage d'une surface vitrée de véhicule automobile,
**caractérisé en ce qu**'il comporte un module de commande selon l'une quelconque des revendications 14 à 16.

## Patentansprüche

1. Verfahren zum Steuern eines Scheibenwaschsystems, das einem Wischsystem einer Kraftfahrzeug-Glasoberfläche zugeordnet ist, wobei das Wischsystem einen Wischmotor (10) für den rotatorischen Antrieb wenigstens eines Wischerblattträgerarms umfasst und wobei das Scheibenwaschsystem einen Flüssigkeitsvorratsbehälter (21) umfasst, der mit wenigstens einer Spritzdüse (20) verbunden ist, die in einem Wischzyklus wenigstens einen Flüssigkeitsstrahl während wenigstens einer ersten Aktivierungsperiode des Scheibenwaschsystems, die zwischen einem Zeitpunkt (t_{d1}) des Beginns des Aufsprühens von Flüssigkeit und einem Zeitpunkt (tₐ₁) des Endes des Aufsprühens der Flüssigkeit, die jeweils in Abhängigkeit von einer ersten Winkelposition bzw. von einer zweiten Winkelposition des Wischerblattträgerarms bestimmt werden und einen ersten Winkelsektor definieren, in dem das Aufsprühen der Flüssigkeit ununterbrochen erfolgt, definiert ist, ausgeben kann, wobei das Verfahren **dadurch gekennzeichnet ist, dass** es darin besteht, den Zeitpunkt (t_{d1}) des Beginns des Aufsprühens um eine Kompensationsdauer (t₁), die wenigstens der Dauer des Transports der Flüssigkeit von dem Vorratsbehälter (21) zu der Spritzdüse (20) entspricht, vorzuziehen.

2. Steuerverfahren nach Anspruch 1, **dadurch gekennzeichnet, dass** der Zeitpunkt des Beginns dadurch vorgezogen wird, dass die Aktivierung des Scheibenwaschsystems zu einem Zeitpunkt befohlen wird, der dem Zeitpunkt (t_{d1}) des Beginns, verringert um die Kompensationsdauer (t₁), entspricht.

3. Steuerverfahren nach Anspruch 1, **dadurch gekennzeichnet, dass** der Zeitpunkt des Beginns dadurch vorgezogen wird, dass die Aktivierung des Scheibenwaschsystems bei einer Winkelposition des Wischerblattträgerarms befohlen wird, die der ersten Winkelposition, korrigiert um einen Winkelwert, der der Winkelverlagerung des Wischerblattträgerarms während einer Dauer entspricht, die der Kompensationsdauer (t₁) entspricht, entspricht.

4. Steuerverfahren nach einem der vorhergehenden Ansprüche, **dadurch gekennzeichnet, dass** die Transportdauer eine vorgegebene feste Dauer ist.

5. Steuerverfahren nach einem der vorhergehenden Ansprüche, **dadurch gekennzeichnet, dass** die Kompensationsdauer (t₁) außerdem von der dem Scheibenwaschsystem inhärenten Verzögerung der elektrischen Verarbeitung abhängt.

6. Steuerverfahren nach einem der vorhergehenden Ansprüche, **dadurch gekennzeichnet, dass** es außerdem darin besteht, in Echtzeit in jedem Wischzyklus die Änderungen der Geschwindigkeit des Wischerblattträgerarms auf der Glasoberfläche in Abhängigkeit von Parametern, die auf die Verwendungsbedingungen des Fahrzeugs bezogen sind, zu schätzen, **und dass** die Kompensationsdauer (t₁) außerdem von den geschätzten Geschwindigkeitsänderungen abhängt.

7. Steuerverfahren nach Anspruch 6, **dadurch gekennzeichnet, dass** die Geschwindigkeitsänderungen des Wischerblattträgerarms anhand von Informationen über eine ausgewählte theoretische Überstreichgeschwindigkeit (V_{Min}, V_{Max}) des Wischsystems und von Informationen (V) über die Geschwindigkeit des Fahrzeugs geschätzt werden.

8. Steuerverfahren nach einem der Ansprüche 6 oder 7, **dadurch gekennzeichnet, dass** die Geschwindigkeitsänderungen des Wischerblattträgerarms anhand einer Messung der Temperatur (T) außerhalb des Fahrzeugs und/oder anhand von Informationen (D₁) bezüglich der Detektion von Regen und/oder anhand von Informationen (D₂) bezüglich Schmutz auf der Glasoberfläche und/oder anhand von Informationen (C) bezüglich des Verbrauchs des Wischmotors (10) geschätzt werden.

9. Steuerverfahren nach Anspruch 6, **dadurch gekennzeichnet, dass** dann, wenn der Motor ein elektronischer Motor ist, die Geschwindigkeitsänderungen des Wischerblattträgerarms anhand der von dem Motor herbeigeführten Geschwindigkeitsänderungen geschätzt werden.

10. Steuerverfahren nach einem der vorhergehenden Ansprüche, **dadurch gekennzeichnet, dass** die erste Aktivierungsperiode während einer Phase der Montage des Wischerblattträgerarms an der Glasoberfläche erfolgt.

11. Steuerverfahren nach Anspruch 10, **dadurch gekennzeichnet, dass** der Zeitpunkt des Beginns des Wischsystems durch Informationen (SAF) bezüglich der festen Ruheposition, die von dem Wischmotor (10) herbeigeführt wird, bestimmt wird.

12. Steuerverfahren nach einem der vorhergehenden Ansprüche, **dadurch gekennzeichnet, dass** die Spritzdüse an dem Wischerblattträgerarm oder an dem Wischerblatt angeordnet ist.

13. Steuerverfahren nach Anspruch 8, **dadurch gekennzeichnet, dass** das Scheibenwaschsystem außerdem wenigstens eine zusätzliche Spritzdüse umfasst, die an dem Wischerblattträgerarm oder an dem Wischerblatt angeordnet ist und in einem Wischzyklus während einer zweiten Aktivierungsperiode des Scheibenwaschsystems, die einer Absenkphase des Wischerblattträgerarms auf der Glasoberfläche entspricht, wenigstens einen Flüssigkeitsstrahl ausgeben kann, wobei der Zeitpunkt (t_{d2}) des Beginns und der Zeitpunkt (tₐ₂) des Endes des Aufsprühens, die der zweiten Aktivierungsperiode entsprechen, jeweils in Abhängigkeit von einer dritten Winkelposition bzw. einer vierten Winkelposition des Wischerblattträgerarms bestimmt werden, die einen zweiten Winkelsektor definieren, in dem das Aufsprühen von Flüssigkeit ununterbrochen erfolgt, wobei das Verfahren außerdem darin besteht, den Zeitpunkt (t_{d2}) des Beginns des Aufsprühens um einen Wert vorzuziehen, der gleich der Kompensationsdauer ist.

14. Steuermodul für ein Scheibenwaschsystem, das einem Wischsystem einer Kraftfahrzeug-Glasoberfläche zugeordnet ist, wobei das Wischsystem einen Wischmotor (10) für den rotatorischen Antrieb wenigstens eines Wischerblattträgerarms umfasst und wobei das Scheibenwaschsystem wenigstens einen Flüssigkeitsvorratsbehälter (21) und eine Pumpe (22), die mit einem Waschflüssigkeitsvorratsbehälter (21) und mit wenigstens einer Spritzdüse (20) verbunden sein kann, umfasst, wobei die Pumpe durch ein Steuersignal (S_{Com}) gesteuert wird, derart, dass sie in einem Wischzyklus wenigstens einen Flüssigkeitsstrahl während wenigstens einer ersten Aktivierungsperiode des Scheibenwaschsystems ausgibt, die zwischen einem Zeitpunkt des Beginns des Aufsprühens der Flüssigkeit und einem Zeitpunkt des Endes des Aufsprühens der Flüssigkeit definiert ist, die jeweils in Abhängigkeit von einer ersten Winkelposition bzw. einer zweiten Winkelposition des Wischerblattträgerarms bestimmt sind, die einen ersten Winkelsektor definieren, in dem das Aufsprühen der Flüssigkeit ununterbrochen erfolgt, **dadurch gekennzeichnet, dass** es Mittel (23) umfasst, um den Zeitpunkt des Beginns des Aufsprühens um eine Kompensationsdauer vorzuziehen, die wenigstens der Dauer des Transports der Flüssigkeit von dem Vorratsbehälter (21) zu der Spritzdüse (20) entspricht.

15. Steuermodul nach Anspruch 14, **dadurch gekennzeichnet, dass** es mit einem Ausgang des Wischmotors (10) verbunden sein kann, der an Rechenmittel (23) Informationen über die theoretische Geschwindigkeit (V_{Min}, V_{Max}) des Wischmotors (10) liefern kann, und mit einem Ausgang eines Sensors (4) für die Geschwindigkeit des Fahrzeugs verbunden sein kann, der an die Mittel (23) Informationen (V) über die Geschwindigkeit des Fahrzeugs liefert.

16. Steuermodul nach Anspruch 15, **dadurch gekennzeichnet, dass** es außerdem verbunden sein kann mit einem Ausgang eines Regensensors (3), der an die Mittel (23) Informationen (D₁) bezüglich der Detektion von Regen liefern kann, und/oder mit einem Sensor (5) für Schmutz auf der Glasoberfläche, der an die Rechenmittel (23) Informationen (D₂) über den Verschmutzungsgrad der Glasoberfläche liefern kann, und/oder mit einem Temperatursensor (6), der an die Rechenmittel (23) Informationen (T) über die Temperatur außerhalb des Fahrzeugs liefern kann, und/oder mit einem Messmittel (12), das an die Rechenmittel (23) Informationen (C) über den Verbrauch des Wischmotors liefern kann, **und dass** die Mittel (23) in jedem Wischzyklus in Echtzeit die Geschwindigkeitsänderungen des Wischerblattträgerarms auf der Glasoberfläche in Abhängigkeit von den von den Sensoren empfangenen Signalen schätzen kann und die Kompensationsdauer in Abhängigkeit von den geschätzten Geschwindigkeitsänderungen einstellen kann.

17. System zum Wischen einer Glasoberfläche eines Kraftfahrzeugs, **dadurch gekennzeichnet, dass** es ein Steuermodul nach einem der Ansprüche 14 bis 16 umfasst.

## Claims

1. Method for controlling a window-washing system associated with a system for wiping a glazed surface of a motor vehicle, said wiping system comprising a wiper motor (10) for rotating at least one wiper-blade arm, and the window-washing system comprising a liquid reservoir (21) connected to at least one nozzle (20) capable of delivering, over a wiping cycle, at least one jet of liquid for at least one first period of activation of the window-washing system defined between a moment (t_{d1}) of initiating the spraying of the liquid and a moment (tₐ₁) of stopping the spraying of the liquid, said moments each being determined as a function respectively of a first angular position and of a second angular position of the wiper-blade arm defining a first angular sector in which the spraying of the liquid is continuous, the method being **characterized in that** it consists in advancing the moment (t_{d1}) of initiation of the spraying by a period (t₁) of compensation corresponding to at least the period for feeding the liquid from the reservoir (21) to the nozzle (20).

2. Control method according to Claim 1, **characterized in that** the moment of initiation is advanced by controlling the activation of the window-washing system at a moment corresponding to said moment (t_{d1}) of initiation minus said period (t₁) of compensation.

3. Control method according to Claim 1, **characterized in that** the moment of initiation is advanced by controlling the activation of the window-washing system at an angular position of the wiper-blade arm corresponding to said first angular position corrected by an angular value corresponding to the angular movement of the wiper-blade arm for a period corresponding to said period (t₁) of compensation.

4. Control method according to any one of the preceding claims, **characterized in that** the feeding period is a predetermined fixed period.

5. Control method according to any one of the preceding claims, **characterized in that** the period (t₁) of compensation is also a function of the electrical processing delay inherent in the window-washing system.

6. Control method according to any one of the preceding claims, **characterized in that** it also consists in estimating in real time, over each wiping cycle, the variations in speed of the wiper-blade arm over the glazed surface as a function of parameters relating to the conditions of use of the vehicle, **and in that** said period (t₁) of compensation is also a function of the estimated variations in speed.

7. Control method according to Claim 6, **characterized in that** the variations in speed of the wiper-blade arm are estimated based on an item of information on a selected theoretical speed (V_{Min}, V_{Max}) of sweeping of the wiping system and on an item of information (V) on the speed of the vehicle.

8. Control method according to either one of Claims 6 and 7, **characterized in that** the variations in speed of the wiper-blade arm are estimated based on a measurement of the temperature (T) outside the vehicle, and/or based on an item of information (D₁) relative to the detection of rain, and/or based on an item of information (D₂) relating to the degree of dirtiness of the glazed surface, and/or based on an item of information (C) relating to the power consumption of the wiper motor (10).

9. Control method according to Claim 6, **characterized in that,** since the motor is an electronic motor, the variations in speed of the wiper-blade arm are estimated based on the speed variations delivered by the motor.

10. Control method according to any one of the preceding claims, **characterized in that** said first activation period takes place during a rising phase of the wiper-blade arm on the glazed surface.

11. Control method according to Claim 10, **characterized in that** the moment of initiation of the wiping system is determined by an item of information (SAF) relating to the fixed stop position delivered by the wiper motor (10).

12. Control method according to any one of the preceding claims, **characterized in that** said nozzle is placed on said wiper-blade arm or on the wiper blade.

13. Control method according to Claim 8, **characterized in that,** since the window-washing system also comprises at least one additional nozzle placed on said wiper-blade arm or on the wiper blade, and capable of delivering, over a wiping cycle, at least one jet of liquid for a second period of activation of the window-washing system corresponding to a descending phase of the wiper-blade arm on the glazed surface, the moment (t_{d2}) of initiation and the moment (tₐ₂) of stopping of the spraying corresponding to said second activation period each being determined as a function respectively of a third angular position and of a fourth angular position of the wiper-blade arm defining a second angular sector in which the spraying of the liquid is continuous, the method also consists in advancing the moment (t_{d2}) of initiation of the spraying by a value equal to said period of compensation.

14. Module for controlling a window-washing system associated with a system for wiping a glazed surface of a motor vehicle, said wiping system comprising a wiper motor (10) for rotating at least one wiper-blade arm, and the window-washing system comprising at least one liquid reservoir (21) and a pump (22) capable of being connected to a washing liquid reservoir (21) and to at least one nozzle (20), said pump being controlled by a control signal (S_{Com}) so as to deliver, over a wiping cycle, at least one jet of liquid for at least one first activation period of the window-washing system defined between a moment of initiating the spraying of the liquid and a moment of stopping the spraying of the liquid, said moments each being determined as a function respectively of a first angular position and of a second angular position of the wiper-blade arm defining a first angular sector in which the spraying of the liquid is continuous, **characterized in that** it comprises means (23) for advancing the moment of initiation of the spraying by a period of compensation corresponding to at least the period of feeding the liquid from the reservoir (21) to the nozzle (20).

15. Control module according to Claim 14, **characterized in that** it can be connected to an output of the wiper motor (10) delivering to the computing means (23) an item of information on the theoretical speed (V_{Min}, V_{Max}) of the wiper motor (10) and to an output of a sensor (4) of the speed of the vehicle delivering to the means (23) an item of information (V) on the speed of the vehicle.

16. Control module according to Claim 15, **characterized in that** it is capable of being connected also to an output of a rain sensor (3) delivering to the means (23) an item of information (D₁) relating to the detection of rain, and/or of a sensor (5) for sensing the dirtiness of the glazed surface, said sensor delivering to the computing means (23) an item of information (D₂) on the degree of dirtiness of the glazed surface, and/or of a temperature sensor (6) delivering to the computing means (23) an item of information (T) on the temperature outside the vehicle, and/or of a measuring means (12) delivering to the computing means (23) an item of information (C) on the power consumption of the wiper motor, **and in that** the means (23) are capable of estimating in real time, over each wiping cycle, the variations in speed of the wiper-blade arm on the glazed surface as a function of the signals received from the sensors, and of adjusting said period of compensation as a function of the estimated variations in speed.

17. System for wiping a glazed surface of a motor vehicle, **characterized in that** it comprises a control module according to any one of Claims 14 to 16.
